Europäisches Patentamt

(19) European Patent Office

Office européen des brevets

(11) Publication number: **0 251 426 B1**

(12) **EUROPEAN PATENT SPECIFICATION**

(45) Date of publication of the patent specification: **31.10.90**

(21) Application number: **87302370.9**

(22) Date of filing: **19.03.87**

(51) Int. Cl.⁵: **C02F 1/26, B01D 11/04, C01D 3/18**

(54) Selective removal of nitrate ions from salt solutions.

(30) Priority: **21.03.86 GB 8607034**

(43) Date of publication of application:
**07.01.88 Bulletin 88/1**

(45) Publication of the grant of the patent:
**31.10.90 Bulletin 90/44**

(84) Designated Contracting States:
**AT BE CH DE ES FR GB IT LI LU NL SE**

(56) References cited:
**DE-A- 2 350 962**
**DE-A- 2 748 609**
**GB-A- 1 461 108**
**US-A- 3 267 029**

(73) Proprietor: **ROHM AND HAAS COMPANY, Independence Mall West, Philadelphia Pennsylvania 19105(US)**

(72) Inventor: **Pirotta, Marico Giuseppe, 4, Rue Thenard, F-75005 Paris(FR)**

(74) Representative: **Tanner, James Percival et al, ROHM AND HAAS (UK) LTD. European Operations Patent Department Lennig House 2 Mason's Avenue, Croydon, Surrey, CR9 3NB(GB)**

ACTORUM AG

## Description

This invention is concerned with the selective removal of nitrate ions from salt solutions. It enables solutions containing nitrate ions and one or more other salts, e.g. sodium chloride, which have been used to regenerate anion exchange resins loaded with nitrate ions, themselves to be regenerated by having the nitrate ions stripped therefrom, so solving a difficult disposal problem, and may also find use in the treatment of other nitrate ion-containing fluids, for example fluids encountered in sewage treatment processes. The process of the invention also enables a valuable fertilizer by-product to be produced.

It is well known to remove nitrate ions from water selectively using anion exchange resins. The loaded resins are themselves usually regenerated by contact with an aqueous solution of sodium chloride which usually has a high sodium chloride concentration. This regeneration yields a sodium chloride solution which is contaminated with nitrate ions and this presents a disposal problem. We have now found a process by which the nitrate ions may be selectively removed from the sodium chloride solution, which can then be re-used, and in turn incorporated into a useful fertilizer product.

GB-A-1,461,108 discloses a process for the removal of nitrate ions from nitrate ion-containing solutions using an extraction solution containing a chloride salt of a water-insoluble organic amine in solution in a water-immiscible organic solvent. However, this method is stated to be unsuitable for the removal of nitrate ions from nitrate ion-containing solutions having a high concentration of chloride.

DE-A 2 350 962 discloses a process for the removal of nitrates from effluents by liquid extraction using a primary, secondary and/or tertiary aliphatic and/or aromatic amine which is essentially insoluble in water or can be rendered essentially insoluble in water by using as diluents aliphatic and/or aromatic hydrocarbons and/or other organic solvents that are either liquid under normal pressure or have been liquified under normal pressure from gaseous solvents. No mention is made as to the selective removal of nitrate ions from solutions containing one or more other salts.

According to the invention there is provided a process for removing nitrate ions from solutions containing nitrate ions and one or more other salts by contacting the solution with amine group-containing material, characterised in that: (a) the solution contains more than 1% by weight, based on the total weight of the solution, of the other salt(s); (b) the nitrate ions are selectively removed; (c) the amine group-containing material is insoluble, or only partially soluble, in water but is soluble in hydrophobic solvent; and (d) the contact of the amine group-containing material with the solution is effected under conditions of high kinetics.

Surprisingly, the process of the present invention enables nitrate ions to be selectively removed from solutions containing high concentrations of one or more other salts, particularly sodium chloride.

Commonly, the salt solution contains chloride salt, particularly sodium chloride. However, sulphate, bisulphate, carbonate, bicarbonate, acetate and/or formate salts, may, for example, be present in the salt solution either alone or in addition to the chloride salt. The salt solution, has, a concentration of the other salt(s) of more than 1% by weight, based on the total weight of the solution. The concentration of the other salt(s) may, however, be at least 5%, e.g. at least 10%, by weight, based on the total weight of the solution.

Salt solutions, e.g. sodium chloride solutions, which can be treated by the process of this invention, and would typically be used as regenerants for anion exchange resins, contain at least 1% by weight of the salt(s), based on the total weight of the solution.

The process of the present invention is particularly suitable for the selective removal of nitrate ions from solutions in which the nitrate ion concentration in the solution is less than the concentration of the other anions present in the solution.

The amine group-containing material used in the process of the invention is in the form of an amine salt, preferably the chloride or sulphate salt, and is conveniently a liquid, for example a liquid amine. Suitable amine group-containing materials include lipophilic amines such as the material marketed by Rohm and Haas Company under the trade mark AMBERLITE LA-2, which is a secondary amine. The lipophilic amine may for example, be in the chloride, hydroxyl, carbonate, bicarbonate, sulphate or bisulphate form.

The process of the invention may be carried out in the presence or absence of organic solvent for the amine group-containing material. A suitable solvent is kerosene.

Conditions of high kinetics may be achieved in the present invention by contacting the salt solution with the amine group-containing material for a time not exceeding 10 minutes. It is important that the contact time is such that the transfer of nitrate ions from the salt solution to the amine group-containing material will not closely approach equilibrium since nitrate ions on the amine group-containing material may, as equilibrium is approached, be removed from the amine group-containing material by other anions present in the salt solution, particularly if such other anions are present in the salt solution in a concentration greater than that of the nitrate ions. By "conditions of high kinetics" we therefore mean such conditions as will not result in an unacceptable return to the salt solution of any nitrate ions removed therefrom by the amine group-containing material.

The contact of the salt with the amine group-containing material may, for example, be effected by mixing these materials together in a vessel, for example, with stirring. Alternatively, the contact of the salt solution with an amine group-containing material in liquid form and/or in the form of a solution in organic solvent may, for example, be carried out by any conventional liquid-liquid extraction technique such as by passing these materials countercurrently to one another. If either these techniques is used, then the materials, after contact with each other, may be separated by decanting and/or centrifuging.

The amine group-containing material, containing nitrate ions removed from the salt solution, may itself be treated, for example with an aqueous solution of ammonium hydroxide, ammonium carbonate, ammonium bicarbonate or potassium bicarbonate, to thereby remove the nitrate ions from, and regenerate, the amine group-containing material which may then be re-used as such or after reactivation into a suitable ionic form. When such treatment is carried out, the resulting nitrate-containing material may be useful as a fertilizer, although it may also readily be decomposed for disposal.

The salt solution which has been purified by the process of this invention by the removal of nitrate ions therefrom, may itself be re-used, for example to regenerate spent anion exchange resin loaded with nitrate ion.

The present invention will now be further illustrated by way of the following Examples, which are for illustrative purposes only and are not to be construed as imposing any limitation on the scope of the invention.

### EXAMPLE 1

100 ml of Duolite ES 196 anion exchange resin, in the chloride form, was used to remove nitrate ions from polluted water.

The spent resin was then regenerated by eluting it with 5 Bed Volumes of 2 M aqueous sodium chloride solution. After such treatment the sodium chloride eluate solution (500 ml) was found to have a sodium chloride concentration of 10% and a nitrate ion concentration of 1.24%.

The eluate solution was then contacted, with stirring, for 1 minute with 2 liters of a 0.1 M kerosene solution of AMBERLITE LA-2. The resultant two phases were then separated and the water phase was analysed and found to have a sodium chloride concentration of 10% and a nitrate ion concentration of only 0.1%.

### EXAMPLE 2

A column containing 100 ml of Duolite ES 196 anion exchange resin, in the chloride form, was used in downflow column operation to remove nitrate ions from water having the following anion composition:-

| anion | concentration (meq/l) |
|---|---|
| $Cl^-$ | 2 |
| $NO_3^-$ | 1.5 |
| $SO_4^{--}$ | 4 |
| $HCO_3^-$ | 5 |

The operation cycle of the column was terminated when the residual nitrate concentration in the effluent from the column had reached 50 ppm.

The exhausted resin was then regenerated in upflow operation using 10 Bed Volumes of a 2.5% by weight sodium chloride solution for a period of 1 hour. The first 5 Bed Volumes of effluent from the column, which were considered to be the fraction containing the main proportion of the nitrate, contained 14 g NaCl/l and 2.5 g $NO_3^-$/l.

The first 5 Bed Volumes (i.e. 500 ml) of effluent were then contacted with 200 ml of a 15% W/W solution of Amberlite LA-2 in hexane. The resulting mixture was stirred for 1 minute and the two phases were separated. The aqueous phase was found to contain 8.9 NaCl/l and 0.3 g $NO_3^-$/l.

### EXAMPLE 3

A column containing 100 ml of Duolite ES 196 anion exchange resin, in the chloride form, was used in downflow column operation to remove nitrate ions from water having the following anion composition:-

3

| anion | concentration (meq/l) |
|---|---|
| $Cl^-$ | 2 |
| $NO_3^-$ | 1.5 |
| $SO_4^{--}$ | 4 |
| $HCO_3^-$ | 5 |

The exhausted resin was then regenerated in upflow operation using 10 Bed Volumes of a 2.5% by weight NaCl solution for a period of 1 hour. The first 6 Bed Volumes of effluent from the column, which were considered to be the fraction containing the main proportion of the nitrate, contained 15.7 g NaCl/l and 3.8 g $NO_3^-$/l.

The first 6 Bed Volumes (i.e. 600 ml) of effluent were then contacted with 360 ml of a 15% W/W solution of Amberlite LA-2 in hexane. The resulting mixture was stirred for 1 minute and then the two phases were separated. The aqueous phase was found to contain 9.6 g NaCl/1 and 0.3 g $NO_3^-$/l.

EXAMPLE 4

This example illustrates the recovery of nitrate from the liquid amine, Amberlite LA-2.

A 10% W/W solution of Amberlite LA-2 in kerosene was prepared and neutralised with a solution containing 0.5eq HCl/l and 0.5eq $HNO_3$/l. The resulting solution, which contained the amine about 50% in the $NO_3^-$ form and about 50% in the $Cl^-$ form, was similar in composition to Amberlite LA-2 (chloride form) after it has been used to extract nitrate ions from the first fraction of a regeneration effluent of an anion exchange resin used to remove nitrate ions from polluted water.

The neutralised Amberlite LA-2 solution was stirred for 30 minutes with an equal volume of an aqueous sodium nitrate solution containing 600 g $NaNO_3$/l of water. The phases were then separated and the organic phase was found to contain the amine 95% in the nitrate form and only 5% in the chloride form.

When this amine was regenerated using ammonium hydroxide or ammonium carbonate, the resulting ammonium nitrate solution was found to be a useful by-product in that the ammonium nitrate could be incorporated into, or used directly as, a fertilizer.

After neutralisation of the thus regenerated Amberlite LA-2 resin, it could be used to extract nitrate from spent anion exchange resin regenerant.

From Examples 1-3 it can be seen that Amberlite LA-2 can be used, in accordance with the process of the invention, to selectively remove nitrate ions from aqueous solutions containing high concentrations of one or more salts.

Example 4 illustrates how the spent Amberlite LA-2, i.e. loaded with nitrate ions, may be regenerated for further use whilst at the same time producing a useful by-product.

"Amberlite" and "Duolite" are trademarks of Rohm and Haas Company, which may be registered in one or more of the designated states.

**Claims**

1. A process for removing nitrate ions from solutions containing nitrate ions and one or more other salts by contacting the solution with amine group-containing material, characterised in that:
   (a) the solution contains more than 1% by weight, based on the total weight of the solution, of the other salt(s);
   (b) the nitrate ions are selectively removed;
   (c) the amine group-containing material is insoluble, or only partially soluble, in water but is soluble in hydrophobic solvent: and
   (d) the contact of the amine group-containing material with the solution is effected under conditions of high kinetics.

2. A process as claimed in claim 1, in which the amine group-containing material comprises liquid amine.

3. A process as claimed in claim 1 or 2, in which the amine group-containing material comprises lipophilic amine, for example, in the chloride hydroxyl, carbonate, bicarbonate, sulphate or bisulphate form.

4. A process as claimed in any preceding claim, which is carried out in the presence of organic solvent for the amine group-containing material, for example, kerosene.

5. A process as claimed in any preceding claim, in which the contact of the solution with the amine group-containing material is effected for a period of less than 10 minutes.

6. A process as claimed in any preceding claim, in which the solution comprises one or more of chloride, sulphate, bisulphate, carbonate, bicarbonate, acetate and formate salts.

7. A process as claimed in claim 6, in which the solution comprises sodium chloride.

8. A process as claimed in any preceding claim, in which the solution has a nitrate ion concentration less than the other salt(s) anion concentration.

9. A process as claimed in any preceding claim, in which the solution has a concentration of the other salt(s) of at least 5% by weight.

10. A process as claimed in any preceding claim, in which the solution is contacted with the amine-group and the amine group-containing material by (i) mixing together the solution and the amine group containing material, for example, with stirring, or (ii) if the amine group-containing material is a liquid or is in the form of a solution in organic solvent, by passing the solution countercurrently to the amine group-containing material.

**Patentansprüche**

1. Verfahren zur Entfernung von Nitrationen aus Lösungen, die Nitrationen und eines oder mehrere Salze enthalten, durch Kontaktieren der Lösung mit einem Amingruppen enthaltenden Material, dadurch gekennzeichnet, daß

(a) die Lösung mehr als 1 Gew.-%, bezogen auf das Gesamtgewicht der Lösung, des anderen oder der anderen Salze enthält,

(b) die Nitrationen selektiv entfernt werden,

(c) das Amingruppen enthaltende Material in Wasser unlöslich oder nur teilweise löslich ist, jedoch in hydrophobem Lösungsmittel löslich ist, und

(d) der Kontakt des Amingruppen enthaltenden Materials mit der Lösung unter hohen kinetischen Bedingungen durchgeführt wird.

2. Verfahren nach Anspruch 1, bei welchem das Amingruppen enthaltende Material aus flüssigem Amin besteht.

3. Verfahren nach Anspruch 1 oder 2, bei welchem das Amingruppen enthaltende Material aus lipophilem Amin, beispielsweise in der Chlorid-Hydroxyl-, Carbonat-, Bicarbonat-, Sulfat- oder Bisulfatform, besteht..

4. Verfahren nach einem der vorhergehenden Ansprüche, welches in Gegenwart eines organischen Lösungsmittels für das Amingruppen enthaltende Material, beispielsweise Kerosin, durchgeführt wird.

5. Verfahren nach einem der vorhergehenden Ansprüche, bei welchem der Kontakt der Lösung mit dem Amingruppen enthaltenden Material während einer Zeitspanne von weniger als 10 Minuten durchgeführt wird.

6. Verfahren nach einem der vorhergehenden Ansprüche, bei welchem die Lösung eines oder mehrere Chlorid-, Sulfat-, Bisulfat-, Carbonat-, Bicarbonat-, Acetat- und Formiatsalze enthält.

7. Verfahren nach Anspruch 6, wobei die Lösung Natriumchlorid enthält.

8. Verfahren nach einem der vorhergehenden Ansprüche, bei welchem die Lösung eine Nitrationenkonzentration besitzt, die geringer ist als die Konzentration an anderem Salz bzw. anderen Salzen.

9. Verfahren nach einem der vorhergehenden Ansprüche, wobei die Lösung eine Konzentration an dem anderen Salz bzw. den anderen Salzen von wenigstens 5 Gew.-% aufweist.

10. Verfahren nach einem der vorhergehenden Ansprüche, wobei die Lösung mit der Amingruppe und dem Amingruppen enthaltenden Material in der Weise kontaktiert wird, daß (i) die Lösung und das Amingruppen enthaltende Material, beispielsweise unter Rühren, vermischt werden oder (ii) falls das Amingruppen enthaltende Material eine Flüssigkeit ist oder in Form einer Lösung in einem organischen Lösungsmittel vorliegt, die Lösung im Gegenstrom zu dem Amingruppen enthaltenden Material geführt wird.

**Revendications**

1. Procédé pour enlever les ions nitrate à partir de solutions contenant des ions nitrate et un ou plusieurs autres sels par mise en contact de la solution avec de la matière contenant des groupes amine, caractérisé en ce que:

(a) la solution contient plus de 1% en poids, par rapport au poids total de la solution, de l'autre ou des autres sel(s);

(b) les ions nitrate sont enlevés sélectivement;

(c) la matière contenant des groupes amine est insoluble, ou seulement partiellement soluble dans l'eau mais est soluble dans du solvant hydrophobe; et

(d) le contact de la matière contenant des groupes amine avec la solution est effectué dans des condi-

5

2. Procédé selon la revendication 1, dans lequel la matière contenant des groupes amine comprend de l'amine liquide.

3. Procédé selon la revendication 1 ou 2, dans lequel la matière contenant des groupes amine comprend de l'amine lipophile, par exemple sous la forme chlorure, hydroxyle, carbonate, bicarbonate, sulfate ou bisulfate.

4. Procédé selon l'une quelconque des revendications précédentes, qui est mise en oeuvre en présence de solvant organique pour la matière contenant des groupes amine, par exemple du kérosène.

5. Procédé selon l'une quelconque des revendications précédentes, dans lequel le contact de la solution avec la matière contenant des groupes amine est effectué pendant une période inférieure à 10 minutes.

6. Procédé selon l'une quelconque des revendications précédentes, dans lequel la solution comprend un ou plusieurs sels de types chlorure, sulfate, bisulfate, carbonate, bicarbonate, acétate et formiate.

7. Procédé selon la revendication 6, dans lequel la solution comprend du chlorure de sodium.

8. Procédé selon l'une quelconque des revendications précédentes, dans lequel la solution présente une concentration en ions nitrate inférieure à la concentration de l'autre ou des autres anions de sel(s).

9. Procédé selon l'une quelconque des revendications précédentes, dans lequel la solution présente une concentration en l'autre ou les autres sel(s) d'au moins 5% en poids.

10. Procédé selon l'une quelconque des revendications précédentes, dans lequel la solution est mise en contact avec le groupe amine et la matière contenant des groupes amine en (i) mélangeant ensemble la solution et la matière contenant des groupes amine, par exemple sous agitation, ou (ii) si la matière contenant des groupes amine est un liquide ou est sous la forme d'une solution dans du solvant organique, en faisant passer la solution à contre-courant par rapport à la matière contenant des groupes amine